# NOUVEAU FASCICULE DE BREVET EUROPEEN

(11) **EP 1 976 367 B2**
(45) Date de publication et mention de la décision concernant l'opposition: **20.01.2016**
(45) Mention de la délivrance du brevet: 25.04.2012
(21) Numéro de dépôt: 07730822.9
(22) Date de dépôt: 12.01.2007
(51) Int. Cl.: A01B 49/02, A01B 49/06, A01B 21/08

(54) **MACHINE DE TRAVAIL DU SOL, TELLE QUE DÉCHAUMEUSE**
BODENBEARBEITUNGSMASCHINE IN DER ART EINES VERTIKALSCHEIBENPFLUGES
MACHINE FOR WORKING THE SOIL, SUCH AS A DISC TILLER

(30) Priorité: 24.01.2006 FR 0600604
(43) Date de publication de la demande: 08.10.2008
(73) Titulaire: Unia Investments S.à.r.l., 2453 Luxembourg (LU)
(72) Inventeur: Evin, Michel, 44850 Ligne (FR)
(74) Mandataire: Godineau, Valérie
(86) Numéro de dépôt international: PCT/FR2007/000059
(87) Numéro de publication internationale: WO 2007/085713

(56) Documents cités:
- EP-A1- 1 300 060
- EP-A2- 1 310 144
- EP-A2- 1 310 144
- WO-A-02/19792
- WO-A1-00/74464
- WO-A1-02/19792
- WO-A1-2004/004437
- WO-A1-2004/034768
- DE-A1- 19 544 199
- DE-A1- 19 544 199
- DE-T2- 69 811 787
- DE-U1- 20 020 593
- DE-U1- 29 714 699
- DE-U1- 29 714 699
- DE-U1-202004 001 397
- GB-A- 2 345 627
- GB-A- 2 345 627

## Description

La présente invention concerne une machine de travail du sol, telle que déchaumeuse, du type comprenant au moins un châssis équipé d'outils aratoires formés d'au moins deux rangées successives de disques, dites respectivement avant et arrière, s'étendant transversalement à l'axe longitudinal du châssis, pris dans le sens de déplacement dudit châssis, chaque rangée de disques étant formée de disques montés individuellement, ou par groupe, indépendants et oscillants par rapport au châssis, de manière à céder sous une pression prédéterminée, de préférence réglable, et obtenir un travail de la terre à profondeur constante des disques, les disques de chaque rangée de disques travaillant dans le sol suivant un terrage réglable par l'intermédiaire d'au moins un organe de référence, tel que roue, patin ou rouleau, couplé audit châssis.

Une telle machine de travail du sol est notamment décrite dans le brevet EP-1.345.487.

Dans une telle machine, la rangée avant ou train avant de disques permet un mélange de la terre et des résidus et un nivellement du sol dans lequel peuvent être placées des graines à semer. La qualité du sol obtenue est fonction de la profondeur de travail du sol. Plus le travail du sol est effectué à une profondeur importante, meilleure est la qualité qui peut s'assimiler en terme de profondeur à un travail de labour. Le lit de semences qui peut résulter de ce travail du sol permet le développement d'un système racinaire profond. Parallèlement, la rangée ou le train arrière de disques est destiné à projeter un flux de terre qui vient recouvrir la partie du sol travaillée par la rangée ou train avant de disques. Ce flux de terre projetée peut constituer par exemple la couche de recouvrement des graines déposées sur le lit de semences obtenu à partir de la première rangée de disques.

Le présent inventeur a constaté que si le flux dé terre projetée à l'aide de la rangée arrière de disques formait une couche de faible épaisseur par comparaison à la couche de sol travaillée à l'aide de la première rangée de disques, il en résultait une croissance plus rapide, plus homogène et plus fiable des semences. L'inventeur a donc imaginé une solution simple pour mettre en application les principes ci-dessus.

La machine de travail telle que décrite ci-dessus ne doit pas être confondue avec les machines appelées cover-crop dont un exemple est fourni dans le modèle d'utilité allemand DE 29714699. Les conceptions différentes engendrent un travail différent du sol. Dans le cas du cover-crop, les disques sont montés non oscillants sur les poutres. En outre, à l'état monté sur les poutres, il présente un angle d'entrure nul puisque leur axe de rotation est parallèle au sol. Le travail obtenu consiste donc uniquement en un déplacement latéral d'une bande de terre sans soulèvement de cette dernière. A l'inverse, dans le cas d'une machine de travail du sol de type déchaumeuse, les disques effectuent à la fois un travail de déplacement latéral et de soulèvement d'une bande de terre. Du fait du montage différent des disques, il en résulte un comportement différent des machines, de sorte que les caractéristiques applicables à l'une ne sont généralement pas transposables à l'autre. En conséquence, rien ne suggère à l'homme du métier de rechercher des caractéristiques connues pour les cover-crops et de les appliquer à des machines à disques oscillants à angles d'entrure et d'ouverture.

Un but de la présente invention est donc de proposer une machine de travail du sol dont la conception permet d'optimiser à faible coût les épaisseurs des couches du sol travaillé par ladite machine en vue de favoriser une croissance ultérieure des cultures.

A cet effet, l'invention a pour objet une machine de travail du sol, telle que-déchaumeuse, du type comprenant au moins un châssis équipé d'outils aratoires formés d'au moins deux rangées successives de disques, dites respectivement avant et arrière, s'étendant transversalement à l'axe longitudinal du châssis, pris dans le sens de déplacement dudit châssis, chaque rangée de disques étant formée de disques montés individuellement, ou par groupe, généralement de deux à cinq disques, indépendants et oscillants par rapport au châssis, de manière à céder sous une pression prédéterminée, de préférence réglable, et obtenir un travail de la terre à profondeur constante des disques, les disques de chaque rangée de disques présentant un angle d'ouverture et un angle d'entrure non nuls et travaillant dans le sol suivant un terrage réglable par l'intermédiaire d'au moins un organe de référence, tel que roue, patin ou rouleau, couplé audit châssis, caractérisée en ce que les disques d'au moins une des rangées de disques présentent un diamètre différent des disques d'au moins une autre rangée de disques, en ce que la rangée avant de disques comporte les disques de plus grand diamètre, et en ce que les disques de la ou des rangées de disques de plus grand diamètre comportent un angle d'ouverture inférieur à l'angle d'ouverture des disques de diamètre inférieur de la ou des autres rangées de disques.

L'utilisation de disques de diamètre différent entre deux rangées de disques permet, à la première rangée de disques, de plus grand diamètre, de travailler dans un premier temps le sol en profondeur pour préparer un lit de semences et de recouvrir ce lit avec une couche de faible épaisseur obtenue par l'action de la seconde rangée de disques. La différence d'épaisseur entre les couches de terre formées résulte de la différence de diamètre des disques dont les moyeux sont, d'une rangée de disques à une autre, positionnés sensiblement au même niveau par rapport au sol. Il en résulte que les disques de plus grand diamètre pénètrent plus profondément dans le sol et, par suite, travaillent le sol sur une hauteur plus importante. Toutes les conditions sont alors remplies pour une culture optimale et notamment un meilleur mélange des résidus végétaux à la terre.

La rangée avant de disques comporte les disques de plus grand diamètre. Les disques de chaque rangée de disques présentent, à l'état couplé au châssis, un angle d'ouverture non nul, les disques de la ou des rangées de disques de plus grand diamètre comportant un angle d'ouverture inférieur à l'angle d'ouverture des disques de diamètre inférieur de la ou des autres rangées de disques. En l'absence d'une telle caractéristique, on constate un déport latéral du châssis. Le déport observé explique pourquoi jusqu'à présent les machines à disques oscillants présentaient des disques de diamètre toujours identique d'une rangée de disques à l'autre, personne n'ayant imaginé de supprimer ce déport ou jouant sur l'angle d'ouverture des disques.

L'invention sera bien comprise à la lecture de la description suivante d'exemples de réalisation, en référence aux dessins annexés dans lesquels :
la figure 1 représente une vue en perspective d'une machine de travail du sol conforme à l'invention ;
la figure 2 représente une vue de côté de la figure 1 ;
la figure 3 représente un autre mode de réalisation d'une machine de travail du sol conforme à l'invention ;

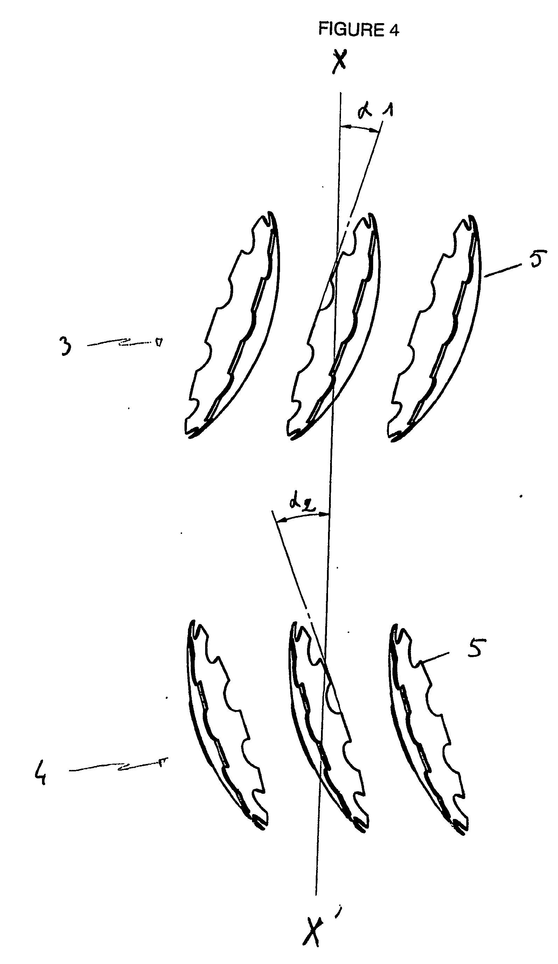

la figure 4 représente une vue partielle de dessus de deux rangées de disques, l'angle d'ouverture ayant été représenté et
la figure 5 représente une vue partielle arrière de deux paires de disques équipées d'éléments de distribution de matière.

Comme mentionné ci-dessus, la machine de travail du sol, telle qu'une déchaumeuse, objet de l'invention, comprend un châssis 2 porté ou tracté, par exemple traîné ou semi traîné, équipé d'outils aratoires. Ce châssis peut affecter un grand nombre de formes. Dans l'exemple représenté, ce châssis est constitué d'un cadre formé de deux longerons, reliés entre eux par des traverses constituées de poutres, équipées des outils aratoires. Ces poutres s'étendent sensiblement perpendiculairement à la ligne de traction du châssis 2. Ce châssis est en outre équipé d'un dispositif d'attelage à un véhicule tracteur. L'attelage est de préférence de type trois points.

Les outils aratoires sont quant à eux constitués d'au moins un train avant ou rangée avant 3 de disques 5 et d'un train arrière ou rangée 4 arrière de disques 5 rotatifs non moteurs. Ces rangées avant et arrière de disques 5 s'étendent le long d'une largeur de travail, c'est-à-dire le long d'une ligne sensiblement perpendiculaire à la ligne de traction ou de déplacement du châssis 1. L'entraînement en rotation de chaque disque 5 non moteur est provoqué, sous l'effet de la force de friction avec le sol, force générée par le déplacement du châssis 2 tracté. Les disques 5 de chaque rangée de disques travaillent dans le sol suivant un terrage ou une profondeur réglable par l'intermédiaire d'au moins un organe 7 de référence. Dans les exemples représenté, cet organe 7 de référence est constitué d'un rouleau couplé au châssis 2, cet organe de référence étant commun à l'ensemble des rangées de disques. Il en résulte ainsi une simplification de la conception de la machine de travail du sol. Ce rouleau est ici couplé au châssis 1 par l'intermédiaire de deux bras s'étendant à l'arrière du cadre formant châssis, lesdits bras étant réglables en position sur le châssis 1. Ce réglage du terrage s'effectue par coopération de cet organe de référence avec le dispositif d'attelage. Cet organe de référence aurait pu, de manière équivalente, être constitué par des roues du châssis 2. Le réglage du terrage permet de maintenir le châssis en position horizontale à un niveau d'élévation prédéterminé par rapport au sol.

Les outils aratoires sont quant à eux constitués par des disques rotatifs non moteurs réalisés de manière telle que chaque disque ou chaque groupe de disques d'une rangée de disques est monté indépendant et oscillant par rapport au châssis 1 porteur de manière à s'escamoter sous une pression prédéterminée généralement réglable et à obtenir ainsi un travail de la terre à profondeur constante des disques déchaumeurs.

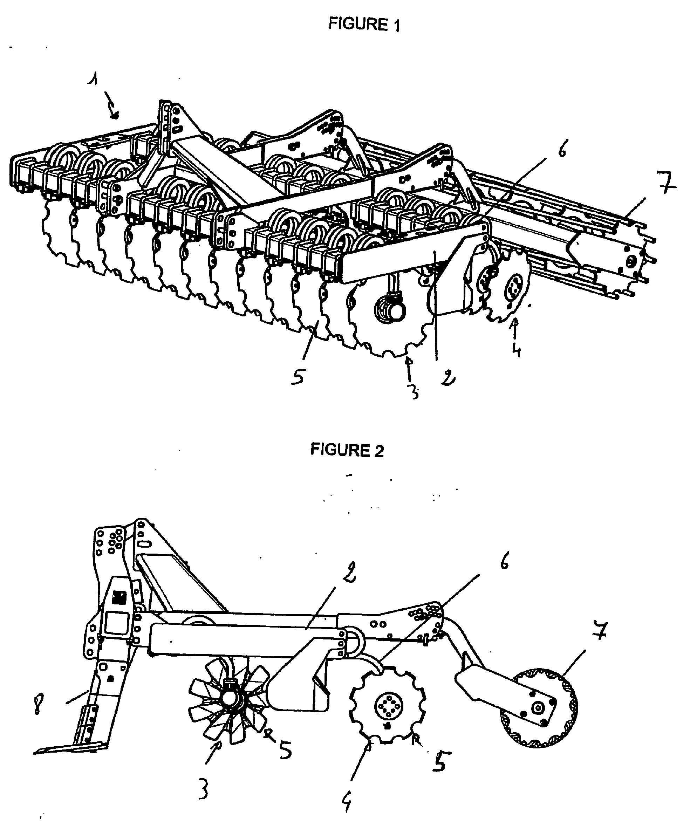

Pour permettre un montage oscillant et indépendant des disques déchaumeurs par rapport au châssis porteur en vue de permettre un escamotage indépendant de chaque disque ou de chaque groupe de disques, chaque disque ou chaque groupe de disques, généralement constitué de deux à cinq disques, est relié au châssis par l'intermédiaire d'un organe de liaison autorisant un échappement du disque ou de l'ensemble des disques du groupe fors de la rencontre avec un obstacle. Ainsi, lorsqu'un train de disques comporte par exemple douze disques, chaque disque peut être monté indépendant et oscillant ou chaque groupe de disques formé de deux à quatre disques peut être monté indépendant ou oscillant par rapport au châssis. Dans ce second cas, un train de disques peut comporter jusqu'à six groupes de disques, les disques d'un groupe étant reliés par un même organe de liaison au châssis. Indépendamment du mode de réalisation retenu, l'ensemble formé d'un disque ou d'un groupe de disques et d'un organe de liaison du disque ou groupe de disques au châssis est monté indépendant est oscillant par rapport au châssis. Cet organe de liaison d'un disque ou groupe de disques peut être constitué d'un bras monté à pivotement sur le châssis autour d'un axe sensiblement parallèle à l'axe de rotation du disque déchaumeur. Ce bras coopère alors avec un élément de précontrainte, tel qu'un ressort, de manière à n'autoriser le pivotement du bras dans le sens d'un effacement du disque par soulèvement que lorsque la pression exercée sur le disque devient supérieure à la pression de tarage dudit élément de précontrainte. Le retour à la position de travail s'effectue automatiquement sous la double sollicitation de l'élément de précontrainte et du poids du disque. Une solution équivalente peut être obtenue au moyen d'un ressort 6 hélicoïdal spiralé comme l'illustre la figure 1. Une des extrémités du ressort 6 est couplée au châssis tandis que l'autre extrémité du ressort est couplée au moyeu d'un disque ou aux moyeux de plusieurs disques, l'extrémité du ressort étant par exemple interposée entre deux moyeux de disques.

De manière caractéristique à l'invention, les disques 5 d'au moins une des rangées 3, 4 de disques 5 présentent un diamètre différent des disques 5 d'au moins une autre rangée de disques.

Dans les exemples représentés, il a été à chaque fois prévu seulement deux rangées de disques. Bien évidemment, ce nombre de rangées de disques peut être plus important.

Dans le cas de trois rangées de disques ou plus, les disques 5 de chaque rangée de disques peuvent présenter un diamètre différent des disques de chacune des autres rangées de disques. On a une disposition dans laquelle le diamètre des disques d'une rangée de disques à une autre décroît depuis l'avant vers l'arrière du châssis pris dans le sens d'avancement du châssis. Ainsi, dans ce cas, aucune des rangées de disques ne présente un diamètre de disque identique au diamètre de disque des disques d'une autre rangée de disques.

On peut également prévoir le cas où l'une des rangées de disques comporte des disques de diamètre différent des autres rangées de disques qui présentent, elles, des disques de diamètre identique d'une rangée de disques à une autre.

La solution est une solution dans laquelle la rangée 3 avant de disques 5 comporte les disques de plus grand diamètre. Cette solution est conforme à celle représentée.

En outre, les disques de chaque rangée de disques présentent, à l'état couplé au châssis, un angle d'ouverture et un angle d'entrure non nuls, les disques de la ou des rangées de disques de plus grand diamètre comportant un angle d'ouverture inférieur à l'angle d'ouverture des disques de diamètre inférieur de la ou des autres rangées de disques. Ce réglage d'un angle d'ouverture différent d'une rangée de disques à une autre permet d'éviter tout déport latéral de la machine. L'angle d'ouverture, qui est l'angle formé par le plan de rotation du disque dépourvu d'angle d'entrure avec le plan vertical parallèle à l'axe XX' d'avancement de la machine, est donc choisi en fonction du diamètre du disque. Pour les disques de plus grand diamètre, la valeur α1 de l'angle d'ouverture est choisie inférieure à celle α2 choisie pour les disques de plus petit diamètre. En conséquence, plus le diamètre du disque est important, plus la valeur de l'angle d'ouverture est faible. Dans le cas d'une différence de diamètre entre deux rangées de disques au moins égale à 45 mm, la différence d'angle d'ouverture est comprise entre 2 et 10°. Dans les exemples représentés, l'angle d'ouverture et l'angle d'entrure sont définis par construction. Il est rappelé, que l'angle d'entrure correspond à l'angle que forme l'axe de rotation du disque avec le plan horizontal formé par le sol. Chaque disque est pré-monté sur son organe de liaison au châssis avec une orientation qui lui confère un angle d'ouverture et d'entrure prédéterminés. C'est donc le positionnement du moyeu du disque par rapport à l'organe de liaison au châssis qui détermine l'orientation du disque et, par suite, son angle d'ouverture et son angle d'entrure.

Les disques d'une rangée de disques sont de dimension identique ou similaire. Les disques 5, d'une rangée de disques à une autre, sont soit des disques de même nature, soit des disques de nature différente. Ainsi, l'exemple de la figure 1 correspond à un cas où les disques sont de même nature. Ces disques 5 sont ici en l'occurrence constitués de disques concaves, à concavité inversée d'une rangée de disques à une autre. Ces disques présentent un grand diamètre, au moins égal à 40 cm, et, de préférence, supérieur à 45 cm. Chaque disque comporte de préférence un angle d'entrure positif compris dans la plage [3 - 25] degrés, et un angle d'ouverture positif compris dans la plage [8 - 30] degrés. Chaque disque est encore de préférence crénelé à sa périphérie. Dans cet exemple où la machine de travail comporte au moins deux rangées 3, 4 de disques 5, la différence de diamètre des disques entres lesdites rangées est de préférence au moins égale à 45 mm. Ainsi, les disques de la rangée avant de disques d'angle d'ouverture α1 présentent un diamètre de l'ordre de 610 mm tandis que les disques de la rangée arrière de disque, d'angle d'ouverture α2 supérieur à α1, présentent ici un diamètre voisin de 510 mm, soit une différence de diamètre entre lesdites rangées égale à 100 mm.

Dans l'exemple représenté à la figure 2, les disques d'une rangée de disques à une autre sont des disques de nature différente. La rangée avant 3 de disques est constituée de disques à pales, chaque pale prenant naissance à la périphérie d'un voile et présentant une torsion par rapport audit voile. Les disques constitutifs de la rangée 4 arrière de disque sont, de manière analogue à ce qui a été décrit pour la figure 1, constitués de disques crénelés concaves.

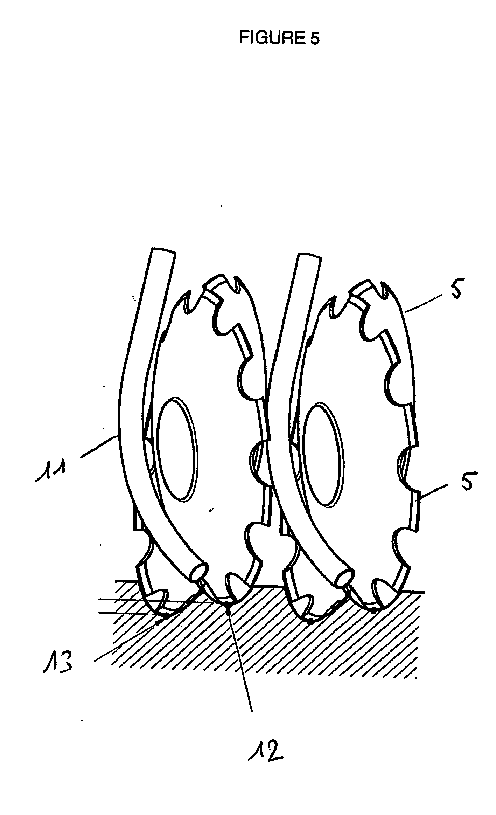

Indépendamment de la nature des disques, la rangée 3 avant de disques 5 peut être précédée d'une rangée 8 de lames agissant par soulèvement du sol comme l'illustre la figure 2. En outre, au moins certains disques d'au moins l'une des rangées de disques peuvent être associés à un élément de distribution de matière, tel qu'un élément semeur de graines 12 ou un élément distributeur de fertilisant 13. Les éléments semeurs ne seront pas décrits plus en détail ci-après. Les graines 12 peuvent par exemple être acheminées par des descentes 11 à partir d'un ou plusieurs organes de distribution, soit par gravité, soit par un transfert pneumatique. Il en est de même du fertilisant 13. Généralement, le fertilisant 13 est associé à la rangée avant 3 de disques 5 tandis la graine 12 est associé à la rangée 4 arrière de disques 5. On respecte ainsi les conseils de culture qui préconisent souvent le dépôt du fertilisant 13 à une profondeur supérieure à celle de la semence 12 comme l'illustre la figure 5.

A chaque fois, l'élément de distribution est positionné au dos du disque, c'est-à-dire côté convexe de ce dernier. Le dépôt de la graine et du fertilisant à des profondeurs variables permet d'éviter les problèmes de phytotoxicité. Cette conception permet également de déposer des semences de nature différente à des hauteurs différentes.

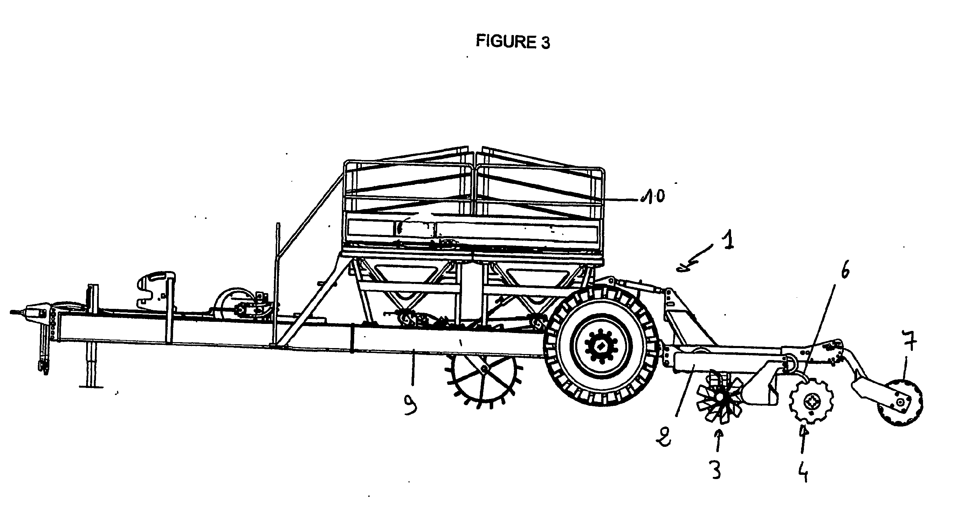

Dans le cas d'une machine plus complexe, celle-ci peut comporter deux châssis, à savoir, au moins un châssis 9 porte trémie(s) 10 auquel le châssis 2, équipé d'outils aratoires, est attelé comme l'illustre la figure 3. Le châssis 9 porte-trémie(s) supporte au moins deux trémies servant l'une par exemple à la distribution de semences, l'autre à la distribution de fertilisant. Généralement, les produits fertilisants sont disposés au niveau ou en aval du train ou rangée avant de disques et les semences immédiatement en amont ou au niveau de la rangée arrière de disques de manière à obtenir un dépôt du fertilisant dans le sol travaillé par la rangée avant de disques, suivi d'un dépôt de graines sur le flux de terre projetée par la rangée ou train avant de disques et un enfouissement des graines par la terre projetée par les disques du train arrière. Grâce au montage oscillant et indépendant des disques ou des groupes de disques sur le châssis et à la présence de l'organe 7 de référence, le flux de terre projetée par chaque disque d'une rangée de disques est toujours sensiblement identique du fait d'un positionnement précis en profondeur de chaque disque de sorte que le niveau d'enfouissement des graines par exemple est toujours sensiblement le même. Lorsque les disques sont de type concave, ils projettent un flux latéral et arrière de terre. Ainsi, lorsqu'ils présentent une concavité inversée d'une rangée de disques à une autre, les disques de la rangée avant de disques projettent un flux de terre latéralement, par exemple à gauche et vers l'arrière, tandis que les disques de la rangée arrière de disques projettent un flux de terre latéralement à droite et vers l'arrière. Comme les disques des rangées présentent des diamètres différents d'une rangée à une autre et que les moyeux de disque sont positionnés sensiblement au même niveau d'une rangée à une autre, les châssis étant dans un plan sensiblement horizontal, les disques de plus grand diamètre pénètrent plus profondément dans le sol et, par suite, projettent une quantité de terre plus importante, ce qui amène à la formation d'une couche de terre d'épaisseur plus importante.

Les éléments de distribution de matière, tels que les éléments semeurs des graines ou les éléments distributeurs de fertilisants, peuvent être interposés entre les rangées avant de disque et les rangées arrière de disque de manière décalée axialement par rapport à la tranche des disques des rangées avant et arrière pour ne pas se retrouver directement derrière ou devant la tranche d'un disque mais plutôt dans l'espace laissé libre entre deux disques à concavité inversée. Il est également possible, au niveau d'une même rangée de disques, de décaler légèrement les disques vers l'avant ou vers l'arrière, par rapport à une ligne perpendiculaire à la ligne de traction dudit châssis.

Grâce à la différence de diamètre entre disques de la rangée avant et disques de la rangée arrière, on obtient naturellement des couches de terre, aménagées par chaque rangée de disques, d'épaisseur variable sans avoir à modifier la conception de la machine.

## Revendications

1. Machine (1) de travail du sol, telle que déchaumeuse, du type comprenant au moins un châssis (2) équipé d'outils aratoires formés d'au moins deux rangées successives de disques (5), dites respectivement avant (3) et arrière (4), s'étendant transversalement à l'axe longitudinal du châssis (2), pris dans le sens de déplacement dudit châssis (2), chaque rangée (3, 4) de disques étant formée de disques (5) montés individuellement, ou par groupe, généralement de deux à cinq disques indépendants et oscillants par rapport au châssis (2), de manière à céder sous une pression prédéterminée, de préférence réglable, et obtenir un travail de la terre à profondeur constante des disques (5), les disques (5) de chaque rangée (3, 4) de disques présentant un angle d'entrure et un angle (α1, α2) d'ouverture non nuls et travaillant dans le sol suivant un terrage réglable par l'intermédiaire d'au moins un organe (7) de référence, tel que roue, patin ou rouleau, couplé audit châssis (2),
**caractérisée en ce que** les disques (5) d'au moins une (3) des rangées (3, 4) de disques (5) présentent un diamètre différent des disques d'au moins une autre rangée de disques (5), **en ce que** la rangée (3) avant de disques (5) comporte les disques de plus grand diamètre et **en ce que** les disques de la ou des rangées de disques de plus grand diamètre comportent un angle (α1) d'ouverture inférieur à l'angle (α2) d'ouverture des disques de diamètre inférieur de la ou des autres rangées de disques.

2. Machine (1) de travail du sol selon la revendication 1,
**caractérisée en ce que** les disques (5) de chaque rangée de disques (5) présentent un diamètre différent des disques de chacune des autres rangées de disques.

3. Machine (1) de travail du sol selon l'une des revendications 1 et 2,
**caractérisée en ce que** le diamètre des disques d'une rangée de disques à une autre décroît depuis l'avant vers l'arrière dudit châssis pris dans le sens d'avancement dudit châssis.

4. Machine (1) de travail du sol selon l'une des revendications 1 à 3,
**caractérisée en ce que** les disques (5) sont, d'une rangée de disques à une autre, soit des disques de même nature, soit des disques de nature différente.

5. Machine (1) de travail du sol selon l'une des revendications 1 à 4,
**caractérisée en ce que** les disques (5) sont des disques concaves à concavité inversée d'une rangée de disques à une autre.

6. Machine (1) de travail du sol selon l'une des revendications 1 à 5,
**caractérisée en ce qu'**elle comporte au moins deux rangées (3, 4) de disques (5) avec une différence de diamètre des disques entre lesdites rangées au moins égale à 45 mm.

7. Machine (1) de travail du sol selon l'une des revendications 1 à 6,
**caractérisée en ce qu'**au moins certains disques d'au moins l'une des rangées de disques sont associés à un élément de distribution de matière, tel qu'un élément semeur de graines (12) ou un élément distributeur de fertilisant.

8. Machine (1) de travail du sol selon l'une des revendications 1 à 7,
**caractérisée en ce qu'**elle comporte en outre au moins un châssis (9) porte trémie(s) (10) auquel le châssis (2), équipé d'outils aratoires, est attelé.

## Patentansprüche

1. Bodenbearbeitungsmaschine (1), wie Schälpflug, der Bauart, die mindestens ein Gestell (2) umfasst, das mit landwirtschaftlichen Werkzeugen ausgestattet ist, die von mindestens zwei aufeinanderfolgenden, jeweils als vordere (3) und hintere (4) Reihe bezeichneten Reihen von Scheiben (5) gebildet werden, die sich in Richtung der Verschiebung des Gestells (2) quer zur Längsachse des Gestells (2) erstrecken, wobei jede Scheibenreihe (3, 4) von individuell oder in Gruppen aus allgemein zwei bis fünf unabhängigen und im Verhältnis zum Gestell (2) schwingenden Scheiben (5) gebildet wird, die derart montiert sind, dass sie unter einem vorbestimmten, vorzugsweise einstellbaren Druck in den Boden eindringen und eine Bodenbearbeitung in konstanter Tiefe der Scheiben (5) erfolgt, wobei die Scheiben (5) jeder Scheibenreihe (3, 4) einen Schnittwinkel und einen Öffnungswinkel (α1, α2) ungleich null aufweisen und den Boden gemäß einer durch mindestens ein Referenzorgan (7) wie Rad, Beschlag oder Rolle, das an das Gestell (2) gekoppelt ist, einstellbaren Bearbeitungstiefe bearbeiten,
**dadurch gekennzeichnet, dass** die Scheiben (5) mindestens einer (3) der Reihen (3, 4) von Scheiben (5) einen Durchmesser aufweisen, der sich von den Scheiben mindestens einer anderen Reihe von Scheiben (5) unterscheidet, dass vordere Reihe (3) von Scheiben (5) die Scheiben mit dem größeren Durchmesser aufweist und dass die Scheiben der Reihe oder Reihen von Scheiben mit dem größeren Durchmesser einen Öffnungswinkel (α1) aufweisen, der kleiner ist als der Öffnungswinkel (α2) der Scheiben mit dem kleineren Durchmesser der anderen Reihe oder Reihen von Scheiben.

2. Bodenbearbeitungsmaschine (1) Anspruch 1,
**dadurch gekennzeichnet, dass** die Scheiben (5) jeder Reihe von Scheiben (5) einen Durchmesser aufweisen, der sich von den Scheiben jeder der anderen Reihen von Scheiben unterscheidet.

3. Bodenbearbeitungsmaschine (1) nach einem der Ansprüche 1 und 2,
**dadurch gekennzeichnet, dass** der Durchmesser der Scheiben von einer Scheibenreihe zu einer anderen von vorn nach hinten des Gestells in Fahrtrichtung des Gestells abnimmt.

4. Bodenbearbeitungsmaschine (1) nach einem der Ansprüche 1 bis 3,
**dadurch gekennzeichnet, dass** die Scheiben (5) von einer Scheibenreihe zu einer anderen entweder gleichartige Scheiben oder andersartige Scheiben sind.

5. Bodenbearbeitungsmaschine (1) nach einem der Ansprüche 1 bis 4,
**dadurch gekennzeichnet, dass** die Scheiben (5) konkave Scheiben mit umgekehrter Konkavität von einer Scheibenreihe zur anderen sind.

6. Bodenbearbeitungsmaschine (1) nach einem der Ansprüche 1 bis 5,
**dadurch gekennzeichnet, dass** sie mindestens zwei Reihen (3, 4) von Scheiben (5) mit einer Durchmesserdifferenz der Scheiben zwischen den Reihen von mindestens gleich 45 mm hat.

7. Bodenbearbeitungsmaschine (1) nach einem der Ansprüche 1 bis 6,
**dadurch gekennzeichnet, dass** mindestens einige Scheiben mindestens einer der Scheibenreihen mit einem Stoffverteilelement wie einem Saatgutsaatelement (12) oder einem Düngerverteilelement verbunden sind.

8. Bodenbearbeitungsmaschine (1) nach einem der Ansprüche 1 bis 7,
**dadurch gekennzeichnet, dass** sie ferner mindestens ein Gestell (9) aufweist, das Bunker (10) trägt, an das das mit landwirtschaftlichen Werkzeugen ausgestattete Gestell (2) angehängt ist.

## Claims

1. A soil working machine (1), such as a dethatcher, of the type comprising at least one chassis (2) equipped with aerating tools formed from at least two successive rows of disks (5), respectively called front (3) and back (4), extending transversely to the longitudinal axis of the chassis (2), taken in the direction of movement of said chassis (2), each row (3, 4) of disks being formed from disks (5) mounted individually, or by groups, generally from two to five independent disks and oscillating relative to the chassis (2), so as to give way under a predetermined pressure, preferably adjustable, and to obtain working of the ground at a constant depth of the disks (5), the disks (5) of each row (3, 4) of disks having an angle of penetration and an opening angle (α1, α2) that are non-zero and working in the soil according to an adjustable topsoiling via at least one reference member (7), such as a wheel, skate or roller, coupled to said chassis (2),
**characterized in that** the disks (5) of at least one (3) of the rows (3, 4) of disks (5) have a different diameter from the disks of at least one other row of disks (5), **in that** the front row (3) of disks (5) comprises disks with larger diameters and **in that** the disks of the row(s) of disks of larger diameter comprise an opening angle (α1) smaller than the opening angle (α2) of the disks with a diameter smaller than the other row(s) of disks.

2. The soil working machine (1) according to claim 1,
**characterized in that** the disks (5) of each row of disks (5) have a different diameter from each of the other rows of disks.

3. The soil working machine (1) according to one of claims 1 and 2,
**characterized in that** the diameter of the disks from one row of disks to the next decreases from the front to the back of the chassis in the direction of travel of said chassis.

4. The soil working machine (1) according to one of claims 1 to 3,
**characterized in that** the disks (5) are, from one row of disks to the next, either disks of the same nature, or disks of different natures.

5. The soil working machine (1) according to one of claims 1 to 4,
**characterized in that** the disks (5) are concave disks with a reversed concavity from one row of disks to the next.

6. The soil working machine according to one of claims 1 to 5,
**characterized in that** it comprises at least two rows (3, 4) of disks (5) with a difference in the diameter of the disks between said rows at least equal to 45 mm.

7. The soil working machine (1) according to one of claims 1 to 6,
**characterized in that** at least some of the disks of at least one of the rows of disks are associated with a material distribution element, such as a seed sowing element (12) or a fertilizer distributing element.

8. The soil working machine (1) according to one of claims 1 to 7,
**characterized in that** it also comprises at least one chassis (9) bearing hopper(s) (10) to which the chassis (2), equipped with aerating tools, is hitched.
